# EUROPEAN PATENT APPLICATION

(11) **EP 3 493 058 A1**
(43) Date of publication of application: **05.06.2019**
(21) Application number: 17306699.4
(22) Date of filing: 04.12.2017
(51) Int. Cl.: G06F 9/448, G06F 9/48, H04L 29/08, G06F 9/455

(54) **METHOD AND DEVICE FOR MIGRATING A STATEFUL FUNCTION**

(71) Applicant: THOMSON LICENSING, 92130 Issy les Moulineaux (FR)
(72) Inventor: LEGALLAIS, Yvon, 35576 Cesson-Sévigné Cedex (FR); ONNO, Stéphane, 35576 Cesson-Sévigné Cedex (FR); LE SCOUARNEC, Nicolas, 35576 Cesson-Sévigné Cedex (FR)
(74) Representative: Vidon Brevets & Stratégie

(57) **Abstract**

A first salient idea is to keep the traffic flowing though the migrating stateful function, without freezing any connection as the traffic is steered, and to process the data traffic by the first instance as the migration is ongoing when the data traffic corresponds to an existing state and does not require any state update. A second salient idea is to forward the data traffic received by the first instance to the second instance when the data traffic corresponds to a new state created or an existing state updated by the first instance as the migration is ongoing. The first instance will process the traffic with or without forwarding to the second instance as long as it receives any data traffic. The migration terminates when the first instance no longer receives any data traffic. The data traffic, forwarded by the first instance to the second instance, is forwarded together with a metadata describing the new state creation or the existing state update, allowing the second instance to process both the data traffic resulting from a traffic steered from to the second instance and the traffic still buffered by the first instance after the migration started, resulting in a data loss less migration. Processing the data traffic by the first instance for existing states without forwarding to the second instance and forwarding the data traffic from the first instance to the second instance along with a metadata allows to keep a high level of performance of the stateful function by maintaining the data processing by the first instance while the second instance is starting, and to avoid any data loss during the migration by forwarding the data traffic received and processed, after the migration started, by the first instance, along with the metadata for any new state to the second instance.

## Description

### 1. TECHNICAL FIELD

The present disclosure relates to the domain of software migration, in particular the migration of stateful functions.

### 2. BACKGROUND ART

In information technology and computer science a program or a function is described as stateful if it is designed to remember preceding events or interactions. The remembered information is called the state of the function. The function internal behaviour or interaction with its environment consists of processing separately occurring events that may or may not cause the function to change its state. A stateful function may need to be migrated from a first processing instance to a second processing instance for several reasons, such as for example maintenance or hardware upgrade purpose. Indeed, the hardware of the processing device running the first instance may need to be upgraded for a more powerful hardware. A stateful function running in a first computing instance of a first processing device may be migrated to a second computing instance running on a second processing device equipped with a more powerful hardware without interrupting the service provided by the stateful function. In another example migrating a stateful function allows to scale up/down the system in order to adjust to some elastic requirements. However, preserving the service operation while the stateful function is migrated is generally complex. Depending on the stateful functions, the migration may or may not tolerate a loss of events or data. Some techniques are known for migrating stateful functions without a loss of events, by freezing data connections during the migration. Freezing data connections however creates some latency in the data processing during the migration. These techniques defer the prevention of event loss to reliable communication protocols such as TCP or HTTP, recovering lost events via retransmission. There is however no technique for recovering lost events for unreliable protocols. Some stateful network functions, such as for example network intrusion detection systems rely on finite state automata based on processing a regular expression on received packets. Packet lost during a migration can cause a disruption of the network function behaviour. The present disclosure has been designed with the foregoing in mind.

### 3. SUMMARY

A first salient idea is to keep the traffic flowing though the migrating stateful function, without freezing any connection as the traffic is steered, and to process the data traffic by the first instance as the migration is ongoing when the data traffic corresponds to an existing state and does not require any state update. A second salient idea is to forward the data traffic received by the first instance to the second instance when the data traffic corresponds to a new state created or an existing state updated by the first instance as the migration is ongoing. The first instance will process the traffic with or without forwarding to the second instance as long as it receives any data traffic. The migration terminates when the first instance no longer receives any data traffic. The data traffic, forwarded by the first instance to the second instance, is forwarded together with a metadata describing the new state creation or the existing state update, allowing the second instance to process both the data traffic resulting from a traffic steered from to the second instance and the traffic still buffered by the first instance after the migration started, resulting in a data loss less migration.

Processing the data traffic by the first instance for existing states without forwarding to the second instance and forwarding the data traffic from the first instance to the second instance along with a metadata allows to keep a high level of performance of the stateful function by maintaining the data processing by the first instance while the second instance is starting, and to avoid any data loss during the migration by forwarding the data traffic received and processed, after the migration started, by the first instance, along with the metadata for any new state to the second instance.

To that end a first method for migrating a stateful function from a first instance to a second instance is disclosed. The stateful function processes data items of a data flow according to a set of states. The first method comprises in the first instance:
- applying the stateful function to a data item received from the data flow;
- migrating the stateful function by transferring the set of states of the first instance to the second instance, the data flow being steered to the second instance;
- if a new state related to the data item is created (S16A) in the set of states by the first instance as migrating is ongoing, the data item is forwarded from the first instance to the second instance together with an information item describing the new state.

According to a variant, if a state is updated by the first instance as migrating is ongoing, the data item is forwarded from the first instance to the second instance together with an updated information item describing the updated state.

According to another variant, applying the stateful function to the data item comprises extracting a key from the data item and processing the data item according to the state corresponding to the key.

In a second aspect, a second method for migrating a stateful function from a first instance to a second instance is also disclosed. The stateful function also processes data items of a data flow according to a set of states. The second method comprises in the second instance:
- receiving the set of states of the first instance, the data flow being steered to the second instance;
- migrating the stateful function by processing said data items of the data flow according to the received set of states;
- receiving from the first instance a data item corresponding to a new state created in the set of states of the first instance after the second instance was started, the data item being received along with an information item describing the new state;
- adding the new state in the set of states.

According to a variant, the second method further comprises:
- receiving from the first instance a further data item corresponding to a state updated in the set of states of the first instance after the second instance was started, the further data item being received along with an updated information item describing the updated state;
- updating the state in the set of states.

According to another variant of the first or the second method, the stateful function operates between an egress network interface and an ingress network interface, said extracting a key from a data item comprising extracting an egress key if the data item is received from the egress network interface, and extracting an ingress key if the data item is received from the ingress network interface.

According to a variant of the first or the second method, the new state is created if there is no state in the set of states corresponding to the egress key.

According to another variant of the first or the second method, processing the data item comprises dropping the data item if there is no state in the set of states corresponding to the ingress key.

According to another variant of the first or the second method, the stateful function comprises a network address translation, and creating the new state comprises allocating a translated port identifier different from the translated port identifiers of already existing states.

According to another variant of the first or the second method, the stateful function comprises a stateful firewall, and processing the data item comprises updating the state with a time of reception of the data item.

In a third aspect, a first processing device for migrating a stateful function from a first instance to a second instance is also disclosed. The first instance is running on the first processing device, the stateful function processes data items of a data flow according to a set of states. The first processing device comprises:
- means for applying the stateful function to a data item received from the data flow;
- means for migrating the stateful function by transferring the set of states of the first instance to the second instance, the data flow being steered to the second instance;
- if a new state related to the data item is created in the set of states by the first instance as said migrating is ongoing, the data item is forwarded from the first instance to the second instance together with an information item describing the new state.

According to a variant, if a state is updated by the first instance as said migrating is ongoing, the data item is forwarded from the first instance to the second instance together with an updated information item describing the updated state.

In a fourth aspect, a second processing device for migrating a stateful function from a first instance to a second instance is also disclosed. The second instance is running on second processing device and the stateful function is processing data items of a data flow according to a set of states. The second processing device comprises:
- means for receiving the set of states of the first instance, the data flow being steered to the second instance;
- migrating the stateful function by processing said data items of the data flow according to the received set of states;
- means for receiving from the first instance a data item corresponding to a new state created in the set of states of the first instance after the second instance was started, the data item being received along with an information item describing the new state;
- means for adding the new state in the set of states.

According to a variant, the second processing device further comprises means for:
- receiving (30, 38) from the first instance a further data item corresponding to a state updated in the set of states of the first instance after the second instance was started, the further data item being received along with an updated information item describing the updated state;
- updating (34) the state in the set of states.

In a fifth aspect, a computer program product for migrating a stateful function from a first instance to a second instance is also disclosed. The computer program product comprises program code instructions executable by a processor for performing the first or the second methods implemented in any of their variants.

In a sixth aspect, a non-transitory computer-readable storage medium storing computer-executable program instructions for migrating a stateful function from a first instance to a second instance is also disclosed. The computer-readable storage medium comprises instructions of program code executable by at least one processor to perform the first or the second methods implemented in any of their variants.

While not explicitly described, the present embodiments may be employed in any combination or sub-combination. For example, the present principles are not limited to the described variants, and any arrangement of variants and embodiments can be used. Moreover, the present principles are not limited to the described stateful function examples and any other type of stateful function is compatible with the disclosed principles.

Besides, any characteristic, variant or embodiment described for a method is compatible with a device comprising means for processing the disclosed method, with a device comprising a processor configured to process the disclosed method, with a computer program product comprising program code instructions and with a non-transitory computer-readable storage medium storing program instructions.

### 4. BRIEF DESCRIPTION OF THE DRAWINGS

- **Figure 1A** and **1B** illustrate two examples of a method for migrating a stateful network function from a first instance to a second instance according to two specific and non-limiting embodiments of the disclosed principles;
- **Figure 2A, 2B** and **2C** illustrate three steps of a migration of a stateful network function from a first instance to a second instance according to a specific and non-limiting embodiment of the disclosed principles;
- **Figure 3** represents a processing device running an instance of a migrating stateful function according to two specific and non-limiting embodiments;
- **Figure 4** represents an exemplary architecture of the processing device of figure 3 according to a specific and non-limiting embodiment.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to stateful functions migration. By stateful function, it is meant here and throughout the document a computer program comprising program code instructions executable by a processor for processing a data item according to a set of states. In computer science a function is defined as stateful if it is designed to remember preceding events or interactions, the remembered information being called the state or more generally the set of states. Throughout the document, the disclosed principles will be described for stateful network functions where data items are received from a network interface, but the disclosed principles are equally applicable to any kind of stateful functions processing data items received by some other means such as for example and without limitation an inter process communication mechanism, or a shared memory coupled with any synchronization mechanism. The disclosed principles are for example applicable to gateway software upgrades, where the stateful network function represents the overall gateway software providing for example internet access, and various home networking services to customer premises. Nowadays, some network providers deploy virtual gateways in data centers. A virtual gateway comprises most of the software of a legacy gateway and runs on a cloud computing infrastructure. A virtual gateway generally also relies on a very basic hardware deployed in the customer premises. A virtual gateway is an example of a stateful network function that can be migrated from a first instance to a second instance according to the disclosed principles. Migrating a virtual gateway software from a first instance to a second instance allows upgrading the virtual gateway software from a first version to a second (backward compatible) version, without needing to stop or interrupt the service during the migration. Indeed, as the migration is data loss less, virtual gateway upgrade can be done without risking a software crash due to a lost data item during the migration.

Other examples of stateful network functions comprise, without limitation, a Network Address Translation (NAT), a stateful network firewall, a stateful application firewall using deep packet inspection, a network intrusion detector. Such stateful network functions process data items between a (home) private network and a (wider) public network. For the sake of clarity and without limitations, such stateful network functions will be described as processing data items between an egress network interface (connected to the private network) and an ingress network interface (connected to the public network). But the disclosed principles are equally applicable to a single network interface, aggregating both the ingress and egress data traffic in a single network interface towards the stateful network function.

By data item, it is meant here and throughout the document a set of bytes that can be exchanged over a network interface with other devices or logical entities. A data item is for example a data packet, or a data frame, or a protocol data unit of any communication protocol. Any kind of data package is compatible with the disclosed principles.

By first or second instance, it is meant here and throughout the document a first or a second instance of the stateful function running on a dedicated hardware resource of one or more processing devices. The hardware resource is for example available via a virtualizing layer, such as for example a hypervisor. The hardware resource includes for example (a part of) a processor, a digital signal processor, a network processor, and more generally any slice of a hardware resources allowing to receive, process, and transmit a data item, including modifying and storing a state of the function. The processing devices are for example hosted in a data center, and the first and second instances are running on different processing devices.

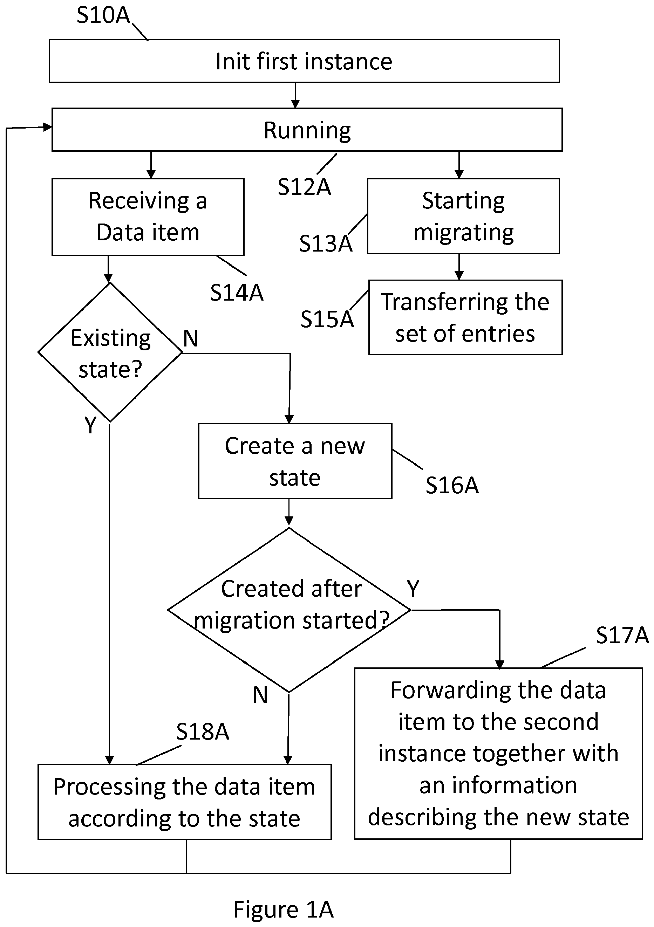

**Figure 1A** illustrates an example of a method for migrating a stateful network function from a first instance of the stateful network function, running on a first processing device to a second instance of the stateful network function running on a second processing device according to a specific and non-limiting embodiment of the disclosed principles. More precisely, **Figure 1A** illustrates the disclosed principles from the perspective of the first processing device hosting the first instance of the migrating stateful network function, noted SNF1. The stateful network function processes data items of a data flow according to a set of states. As previously mentioned the set of states corresponds to the information memorized by the stateful function at least between the processing of successive data items. The data flow corresponds to a consistent set of data items to be processed by the stateful network function. Considering a data center hosting a plurality of processing devices interconnected via a network within the data center, the data center network is configured to route data flows to processing devices according to various rules. Various encapsulations are possible for routing a data item to a processing device, such as for example layer two encapsulation (where data items are encapsulated in layer two frames using the MAC address of the processing device as destination MAC address), or layer three encapsulation (where data items are encapsulated in IP packets using an IP address of the processing device as destination IP address). According to this particular and non-limiting embodiment, a data flow corresponds to the data items routed to a particular instance of a particular processing device. But any kind of data flow representing a consistent set of data items (i.e. wherein the items of the data flow share common values for a set of data fields) is compatible with the disclosed principles. Moreover, the disclosed principles are not limited to processing devices running in a data center, and are also applicable to a migration between processing devices located at any location.

### Before Migrating SNF1

In the step S10A, the first instance is initialized, which comprises initialization of SNF1 and of the set of states (to for example no state, or idle states). In the step S12A, SNF1 is running and waits for at least two types of events, the first being a reception of a data item to process, and the second being a reception of a request to start migrating the stateful network function. In a first example the request is received from a local user interface. In a second example the request is received from a configuration manager via the network interface. In yet another example, the request is locally generated based on a timer.

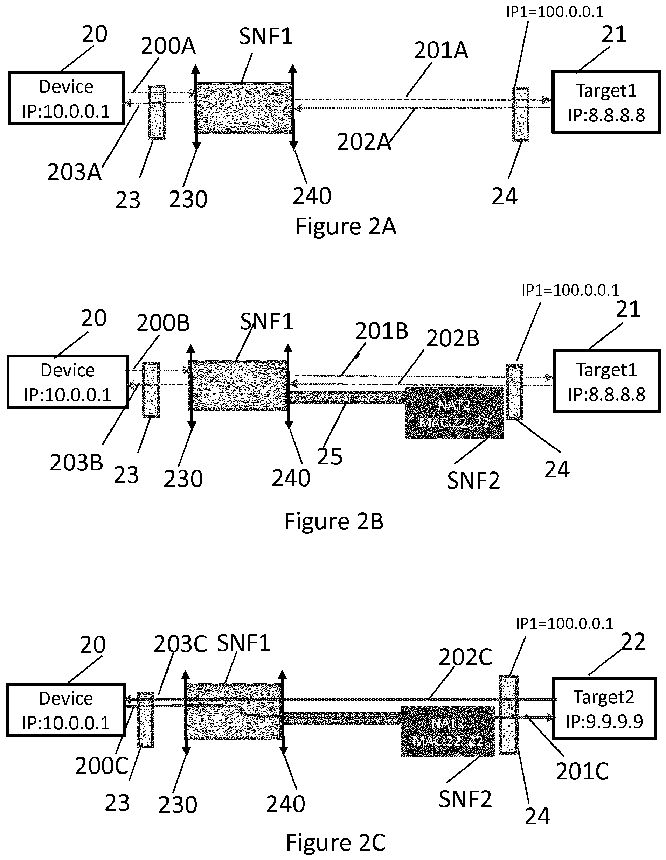

In the step S14A, a data item is received from a network interface of the processing device running SNF1. A key is extracted from the data item, wherein the key corresponds for example to a concatenation of various fields or sub parts of the received data item. Taking the non-limiting example of a NAT SNF1 (that will be detailed further below with Figures 2A, 2B and 2C), a key for example corresponds to a tuple comprising at least a source IP address and a source port identifier of a data item received from the egress network interface.

As the data item is received by SNF1, the set of states may already comprise a state corresponding to the key, because for example a preceding data item has been received with the same source IP address and source port identifier, a port map has already been created, and the preceding data item has already been translated according to the port map. Applying the stateful network function to the received data item comprises extracting a key from the data item, and if the set of states comprises a state corresponding to the key, the data item is processed according to the key in the step S18A.

As the data item is received by SNF1, the set of states may not comprise any state corresponding to the key, because for example the data item corresponds to the first data item received by SNF1 with that source IP address and source port identifier. Applying the stateful function to the data item comprises the step S16A of creating a new state in the set of states, if there is no state corresponding to the key in the set of states, the data item being further processed in the step S18A according to the new state.

### Migrating SNF1 to SNF2

In the step S13A, and independently of the step S14A of receiving a data item, SNF1 receives an indication to start migrating to SNF2. This indication is for example generated by a configuration manager running on another or on the same processing device. The indication comprises at least an identifier of SNF2, allowing SNF1 to send data to SNF2. For example, the configuration manager establishes a data path between SNF1 and SNF2 in the data center network allowing information exchange between both instances. Advantageously, the data connections flowing though the migrating stateful function are not stopped, and data items are kept flowing during the migration.

In the step S15A, the set of states is transferred from SNF1 to SNF2 using the data path. More precisely, the set of states is transmitted from SNF1 to SNF2 using a reliable data transfer exchange protocol. Various techniques are possible for reliably transmitting data from SNF1 to SNF2. In a first variant, forward error correction is added to the set of states for being transmitted by SNF1 to SNF2 in a single data transmission. In a second variant, the set of states is transmitted using an acknowledged protocol between SNF1 and SNF2. In yet another variant a remote synchronization protocol such as the popular rsync protocol is used between SNF1 and SNF2. Any technique for reliably transferring the set of states from SNF1 to SNF2 is compatible with the disclosed principles.

Once the transfer of the set of states from SNF1 to SNF2 is completed, the traffic of the data flow is steered to the second instance. This is done for example by the configuration manager running on another processing device and modifying the configuration of the data center network, so that the data items initially targeted to the processing device running SNF1 are routed to the processing device running SNF2. This may be accomplished by various techniques such as for example and without limitation, reconfiguring the control plane of the data center network according to the software defined network architecture. If, both processing devices are not located in a same data center, they are interconnected via one or more networks. In such a case the data path is set up according to any kind of tunnelling protocol running over the one or more networks.

In another example the reconfiguration of the control plane of the network is done by SNF1 itself, once the set of states has been successfully transmitted from SNF1 to SNF2. According to any of the above examples, the network is advantageously reconfigured without freezing the data traffic. As the data connections are not stopped while the network paths are adjusted, there is a risk of losing data items flowing over the migrating stateful network function while the network configuration changes.

As migrating the stateful network function is started in the step S13A, the processing of the data items is not stopped. More precisely, as migrating is ongoing, data items are still received in the step S14A and processed in the step S18A. This is due at least to the fact that the data connections were not frozen when starting the migration. If a new state related to a received data item is created in the step S16A by the first instance as the migration is ongoing (i.e. after the migrating started in the step S15A), the data item is forwarded by the first instance of the stateful network function SNF1 to the second instance of the stateful network function SNF2, the data item being forwarded together with an information item describing the created new state in the step S17A. In a first example a single data packet is transmitted by SNF1 to SNF2 over the data path, the single data packet comprising the data item and the information item indicating the new state. In another example, two data packets are transmitted by SNF1 to SNF2 over the data path, one comprising the data item, the second comprising the information item indicating the new state and an identifier pointing to the first data packet comprising the data item. In yet another example forwarding the data item comprises adding a Network Service Header (NSH) as defined by IETF to the data item and encapsulating the information item describing the new state in the NSH. Any technique for transmitting the data item from SNF1 to SN2 together with a metadata describing the new created state is compatible with the disclosed principles. Forwarding the data item from SNF1 to SNF2 together with a metadata describing the created new state allows keeping SNF2 up to date with any new created state as the migration is ongoing despite the completion of the transfer of the set of states to SNF2.

According to a specific and non-limiting embodiment, processing a received data item according to an existing state of the set of states further comprises updating the existing state. Depending on the stateful network function, a state may for example log information on the sequence number of a protocol in the data item, or on the time of reception of the data item. Storing such kind of information is for example useful for stateful firewall or for network intrusion detection stateful network functions. According to this specific and non-limiting embodiment, if a state is updated by SNF1 as the migration is ongoing (i.e. after the migration started), the data item is forwarded from the first instance to the second instance together with an updated information item describing the updated state.

In a first variant, the data item is processed by SNF1 according to the new created (or updated) state and the processed data item is forwarded to SNF2 together with the metadata describing the new (or updated) state. Taking the example of the NAT, where SNF1 receives a data item from the egress network interface and creates a new state, the source address and the source port identifier are translated by SNF1 according to the new state, and the data item comprising a translated source address and a translated source port identifier is forwarded to SNF2 together with the metadata describing the translation (port mapping). SNF2, receiving the data item and the metadata updates its set of states (adds a new entry corresponding to the metadata) and transmits the received data item as it is without any further translation on the ingress network interface.

In a second variant, the data item is not processed by the SNF1 and is forwarded as received by SNF1 to SNF2 together with the metadata describing the new (or updated) state. In that case, SNF2, in addition to the update of the state, processes the data item according to the metadata before further transmitting the processed data item. Any further variant where the processing is shared between the first and the second instance of the migrating stateful function is compatible with the disclosed principles.

According to any variant, SNF1 processes data items in the step S18A as long as data items are received in the step S14A. As the traffic has been steered to the SNF2 as part of the migration, SNF1 will stop receiving data items at some point. Thus SNF1 terminates when it detects it does not receive data items any more. Several techniques may be used for that purpose: in a first example the packet reception time is monitored, and SNF1 terminates in case no packet is received after the migration started over a duration above a given value. In a second example, the time after the migration is monitored and SNF1 terminates when the time after the migration started exceeds a duration of another given value. Any technique for deciding to terminate SNF1 is compatible with the disclosed principles.

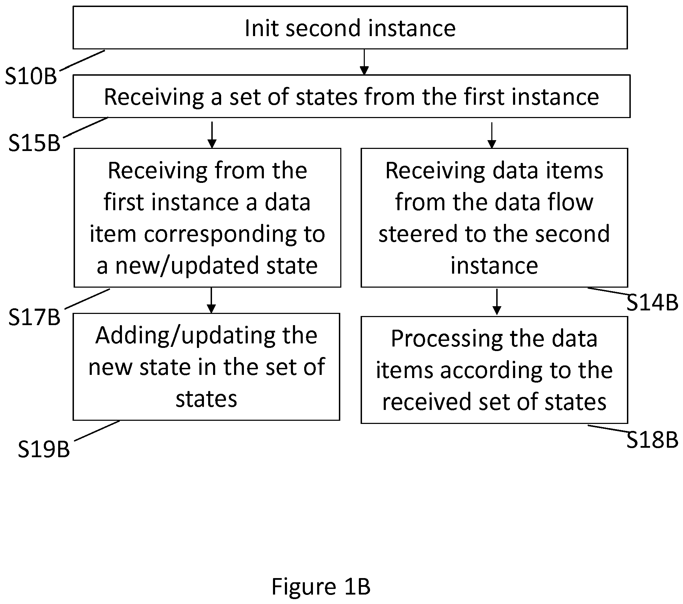

**Figure 1B** illustrates a method for migrating a stateful network function from a first instance of the stateful network function running in a first processing device to a second instance of the stateful network function running in a second processing device according to a specific and non-limiting embodiment of the disclosed principles. More precisely, **Figure 1B** illustrates the disclosed principles from the perspective of the second processing device hosting the second instance of the migrating state network function SNF2.

In the step S10B, SNF2 is initialized. SNF2 is for example started by a configuration manager (not represented) running on another processing device. In another example, SNF2 is started by SNF1.

In the step S15B, SNF2 receives from SNF1 a set of states, representing the set of states of SNF1 before the migration started. The set of states may be received according to any variant previously described.

After the reception by SNF2 of the set of states of SNF1, and after the data flow has been steered to the processing device running SNF2, SNF2 receives data items from the data flow in the step S14B.

In the step S18B, SNF2 processes the received data items according to the received set of states of SNF1. As for SNF1, SNF2 extracts a key from the data item and if the set of states comprises a state corresponding to the key, SNF2 processes the data item according to the state, otherwise (if there is no state in the set of states corresponding to the extracted key), SNF2 creates a new state in the set of states and processes the data item according to the new created state.

In the step S17B, SNF2 receives a data item corresponding to a new state created in the set of states of SNF1 by SNF1, after SNF2 was started, the data item being received along with an information item describing the new state (created by SNF1). According to a specific and non-limiting embodiment where processing the data item according to an existing state comprises updating the existing state, SNF2 may receive a data item from SNF1 together with a metadata indicating that an existing state has been updated.

In the step S19B, the new state, created by SNF1 is added in the set of states of SNF2. According to the specific and non-limiting embodiment, where an existing state has been updated by SNF1, and a metadata is received indicating an existing SNF1 state update, the corresponding existing state is updated in the set of states of SNF2 according to the received metadata. Optionally, and as previously described, SNF2 performs a part of or all the processing of the stateful network function on the data item according to the new (or updated) state.

It may happen that the data item sequentiality is disrupted during the migration. Since SNF2 receives all the data items for which either a new state was created, or an existing state was updated, SNF2 is able to reorder those data items (received from SNF1) with the data items directly received from the data flow as a result of the traffic steering. Therefore, while updating an existing state, SNF2 is able to apply the updates in an order corresponding to the data item sequentiality.

In the specific and non-limiting example of a NAT function, involving only state (port map) creation and no state update, a conflicting situation may occur in case a new port identifier was allocated for a first new connection (new state created) by SNF1 and the same new port identifier was allocated by SNF2 for a second new connection, different from the first connection. In such an example, as no existing state update is involved, no reordering by SNF2 is needed. If for example SNF2 receives from SNF1 the forwarded data item corresponding to the first new connection after having translated the port identifier of the data item of the second new connection with the conflicting new port identifier, SNF2 allocates another port identifier among available values to the first new connection, and translates the data item of the first connection with that port identifier, different from the conflicting new port identifier.

**Figure 2A, 2B** and **2C** illustrate a few steps of a migration of a stateful network function from a first instance running in a first processing device to a second instance running in a second processing device according to a specific and non-limiting embodiment of the disclosed principles. The stateful network function illustrated in **Figure 2A, 2B** and **2C** processes data items between an egress network interface 230 (corresponding for example to a private network) and an ingress network interface 240 (corresponding for example to a public network). Such stateful functions process egress 200A, 200B, 200C and ingress 202A, 202B, 202C data items according to a set of states, wherein some ingress data items 202A, 202B, 202C are received in response to some previously processed egress data items 201A, 201B, 201C. More precisely, processing an egress data item 200A, 200B, 200C comprises extracting an egress key from the egress data item 200A, 200B, 200C. If the set of states comprises an existing state corresponding to the extracted egress key, the egress data item 202A, 202B, 202C is processed according to the existing state, otherwise (if the set of states does not comprise any state corresponding to the extracted egress key), a new state is created in correspondence to the extracted egress key. The new state creation may for example comprise allocation of some data. Processing an ingress data item 202A, 202B, 202C (potentially coming in response to an egress data item 200A, 200B, 200C) comprises extracting an ingress key from the ingress data item 202A, 202B, 202C. If the set of states comprises an existing state corresponding to the extracted ingress key, the ingress data item 202A, 202B, 202C is processed according to the existing state, otherwise (if the set of states does not comprise any state corresponding to the extracted ingress key), the ingress data item 202A, 202B, 202C is dropped (deleted) and not forwarded back to the egress network interface 230. Examples of such stateful network function include without limitations NAT and stateful firewalls (both network and applicative fi rewalls).

The set of states comprise states wherein a same state is accessible via both an egress key and an ingress key. For the sake of clarity, the set of states is described as a symmetric table, where a same table entry can be queried using two different keys. A symmetric table for example comprises two unidirectional tables (an egress table and an ingress table), wherein creating or updating a state in the set of states comprises creating or updating the state in both the egress table and the ingress table. The ingress and the egress tables are for example hash tables or key value store tables where the egress/ingress keys are the hashes or keys and the states are the entries (the values) of the table. Any kind of data structure configured to store a set of states wherein a same state is accessible by two different keys is compatible with the disclosed principles. For the sake of clarity, the disclosed principles are described using states for describing the remembered information of the stateful function. A state may be any kind of data structure storing information, including but not limited to integer or float values, strings, tuples of strings and/or values of any type and size. Depending on the nature of the stateful function, a state may further comprise global information on the host running the stateful function (a host may for example run several stateful functions of a same or different types). A state may further comprise global information related to the stateful function, and global to several (local) states. Taking the example of network stateful functions, a global state comprises for example and without limitations global protocol values (maximum number of TCP connection, range of port identifier values). A local state comprises for example information related to a connection such as for example and without limitations, timeout values, port mappings, ...).

### NAT specific and non-limiting embodiment

In its simplest form a NAT uses a single public IP address and translates a private IP source of an egress packet to the single public IP address. It further allocates a port identifier in a range of port identifiers, and translates the source port of the egress packet by the allocated port identifier, also called translated port identifier. In more complex forms, a NAT may use a pool of IP public addresses. In such a case, port identifiers are allocated per public IP address. The correspondence [(IP source address, source port)-> public IP address, allocated port] is stored as a state in the set of states, generally called a port map table and further used to translate back a response packet coming in an ingress data item.

According to a specific and non-limiting NAT embodiment, an egress key, extracted from an egress data item comprises the source IP address, the destination IP address, the source and the destination port identifiers. As the source and destination port identifiers relate to a transport protocol (such as TCP or UDP), an indication of the transport protocol (TCP or UDP) is further comprised in the egress key. For the sake of clarity and without loss of generality, the disclosed principles are described using most popular NAT that use four tuple values to allocate port identifiers (both source and destination IP addresses, and both source and destination port identifiers). But other NATs, allocating ports based on only the source IP address and the source port identifier are also compatible with the disclosed principles.

According to the specific and non-limiting NAT embodiment, creating a new state corresponding to an extracted egress key comprises allocating a new port identifier among the port identifiers not already used by the NAT, and storing the new port identifier in the mapping table (set of states), together with the source IP address and port of the egress key as original source IP address and original port identifier. In a variant, where the NAT uses a pool of public IP addresses, the state further comprises the public IP address of the pool to be used together with the new allocated port identifier. According to the NAT embodiment, processing the egress data item comprises translating the source IP address and the source port of the received egress data item into respectively the public IP address and the allocated (translated) port identifier according to the state (port map) corresponding to the egress key. The disclosed principles are advantageous in the NAT case because a full and common range of port identifiers can be used by both instances SNF1 and SNF2 involved in the migration without risking any conflict in allocating port identifiers. Some prior art methods are known to split a range of available port identifiers between the migrating instances SNF1, SNF2 so that ports allocated by SNF2 are not conflicting with ports allocated by SNF1 after the migration started. According to the disclosed principles, a common range of port identifiers can be used between SNF1 and SNF2, since the forwarding by SNF1 to SNF2 of the data item along with information about any new state created after the migration started, allows SNF2 to deal with potential conflicting allocation, by reallocating the port identifier and remapping the port in the data item accordingly.

According to the NAT embodiment, the ingress key extracted from an ingress data item comprises the source IP address, the destination IP address, the source and the destination port identifiers of the ingress data item. As the source and destination port identifiers relate to a transport protocol (such as TCP or UDP), an indication of the transport protocol (TCP or UDP) is further comprised in the ingress key. It is to be noted that the source IP address and port identifier of an ingress key correspond to the destination IP address and port identifier of an egress key for a same state. However, the destination IP address and port identifier of the ingress key are different from the source IP address and port identifier of the egress key for that same state. Querying the set of state with the extracted ingress key allows to retrieve the state that comprises the original source IP address and port to be translated back. According to the NAT embodiment, if the set of states comprises a state (port map) corresponding to an ingress extracted key, processing the ingress data item comprises translating the destination IP address and the destination port of the received ingress data item into respectively the original IP address and the original port according to the port map corresponding to the ingress key. According to the NAT embodiment, if the set of states does not comprise any state (port map) corresponding to the extracted ingress key, processing the ingress data item comprises deleting the ingress data item (or at least not forwarding the data item back to the egress network interface), as the ingress data item does not correspond to any previous egress data item.

### Stateful Firewall specific and non-limiting embodiment

In a first variant, the stateful firewall is a network firewall and operates in conjunction of a NAT. Same ingress and egress keys as for the NAT embodiment are used. In addition to the NAT embodiment which only drops ingress data items if there is not state in the set of states corresponding to the ingress key, the firewall may decide to drop ingress packets according to further rules. For example, the firewall may monitor the time of reception of egress data items for a given state, to keep forwarding back ingress data items only when they are received within a time interval of a fixed duration from the reception of last egress data item. This allows to drop ingress data items received too far from a preceding egress data item for a given state. According to that example, processing an egress data item for a new state comprises storing a time of reception of the egress data item by the processing instance, and processing an egress data item for an existing state comprises updating the state with the time of reception of the egress data item by the processing instance.

In another example the firewall monitors the current stage of a connection (corresponding to a state in the disclosed principles), including but not limited to session initiation, handshaking, data transfer and completion connection. Taking the example of TCP protocol, the state comprises information on the stage of the protocol (session, initiation, handshaking, data transfer, completion connection), and for each stage some further information describing expected next steps of the protocol (i.e. what type of egress/ingress TCP packets are expected at that stage of the protocol). Such firewalls are useful to protect against network attacks. According to that example, processing an egress and/or an ingress received data item for an existing state comprises updating the information describing the current stage of the protocol and updating the expected next steps of the protocol. In addition, processing an egress and/or an ingress data item for an existing state further comprises blocking the egress and/or the ingress data item in case the (egress and/or ingress) data item does not correspond to an expected next step of the protocol.

In a second variant, the stateful firewall is a network firewall not operating in conjunction of a NAT. In such a variant, the ingress and the egress keys are equivalent, both comprising source IP address and port identifiers as well as destination IP address and port identifiers, wherein the source (IP address and port) of an egress key corresponds to the destination (IP address and port) of the egress key for the same state. All the features of the first variant are also applicable here.

In a third variant, the stateful firewall is an application firewall. According to that variant, the egress and ingress keys are extracted according to the first or the second variant. In addition, some further information is extracted from the data items via for example a deep packet inspection technique, to further monitor states of upper protocols such as for example and without limitation HTTP (HyperText Transfer Protocol) or SSL (Secure Socket Layer), so as to check that responses are consistent with requests, or that data items do not include corrupted data, such as virus. Further information includes for example and without limitation data about cookies and SSL session identifiers. According to that variant, processing an egress and/or an ingress data item for an existing state is similar to the first variant, i.e., comprising updating the information describing the current stage of a protocol and updating the expected next steps of the protocol. In addition, processing an egress and/or an ingress data item for an existing state further comprises blocking the egress and/or the ingress data item in case the (egress and/or ingress) data item does not correspond to an expected next step of the protocol.

**Figure 2A** represents the first instance of the stateful network function SNF1 prior to the migration. For the purpose of the illustration, a NAT stateful network function is described below. According to the illustrative example, the device 20 has an IP address (IP:10.0.0.1) sends an egress data item 200 targeted to the target device 21 having an IP address (IP:8.8.8.8). Considering the device 20 uses port 1000 as source port and port 8000 as destination port, the egress data item 200 is written as (10.0.0.1, 1000 -> 8.8.8.8, 8000). The egress data item 200 is received by a communication equipment 23 of the data center network that redirects the egress data item 200 to the processing device running SNF1 by for example encapsulating the egress data item in a layer 2 frame using the MAC address 11..11 of the processing device running SNF1.

Referring to figure 2A, SNF1 receiving the egress data item 200A (10.0.0.1, 1000 -> 8.8.8.8, 8000), processes the egress data item as follow: if there is no port map entry (existing state) in the port map table (set of states), SNF1 allocates a new port value among the unused values (for example 100) and stores a new entry in the key value store port map table (create a state). The egress data item 200A is then processed by translating the source IP address to the public IP address (for example 100.0.0.1) and the source port by the allocated port. The processed egress data item 201A (100.0.0.1, 100 -> 8.8.8.8, 8000) is sent by SNF1 via the ingress network interface. The processed egress data item 201A is received by a further communication equipment 24 of the data center and routed to the target device 21, which replies by sending an ingress data item 202 (8.8.8.8, 8000 → 100.1.1.1, 100) targeted to the IP public address on the allocated port 100. SNF1, receiving the ingress data item 202A, extracts an ingress key. As the set of states (port map table) comprises a state (existing port map entry according to the current example) corresponding to the ingress key, SNF1 processes the ingress data item 202A according to the port map entry, i.e. by translating the destination IP address and port into respectively the original source IP address and the port of the port map entry. The processed ingress data item 203A (8.8.8.8, 8000 -> 10.1.1.1, 1000) is sent by SNF1 to the device 20 via the egress network interface.

**Figure 2B** represents the first instance of the stateful network function SNF1, processing data items according to existing states after the migration started. According to the illustrative example, the second instance SNF2 has been created and started on a second processing device. A data path 25 has been created, for example by a configuration manager. The data path allows SNF1 and SNF2 to exchange data over the data center network. Also the configuration manager has reconfigured the communication equipment 23 and 24 to steer the data flow from SNF1 to SNF2, so that the data items that were initially targeted to the processing device running SNF1 are transmitted to the processing device running SNF2 (for example by encapsulating them in a layer 2 frames using the MAC address 22..22 of the processing device running SNF2).

As SNF1 receives a further egress data item 200B (10.0.0.1, 1000 -> 8.8.8.8, 8000) with the same source and destination address and ports as the previous egress data item 200A, the set of states comprises an existing state corresponding to the extracted egress key. Although the migration already started, and the transfer of the set of states from SNF1 to SNF2 is either ongoing or completed, the egress packet is processed by SNF1 without being forwarded to SNF2 if the existing state is not updated. The processed further egress data item 201B is routed to the target device 21. If the existing state corresponding to the egress key is updated (for example in case of a stateful firewall), the egress data item is forwarded to SNF2 (not represented).

Similarly, in the reverse direction, as SNF1 receives an ingress data item 202B, whose extracted ingress key corresponds to an existing state of the set of states. If the existing state is not updated (i.e. remains unchanged throughout the processing of the ingress data item 202B), SNF1 processes the ingress data item without forwarding to SNF2, despite the migration started. If the existing state corresponding to the ingress key is updated, the ingress data item is forwarded to SNF2 (not represented).

**Figure 2C** represents the processing of data items by the migrating stateful functions SNF1, SNF2, wherein a new state is created after the migration has started. According to the illustrative example an egress data item 203C is received by SNF1 from the device 20 targeted to a device 22 different from the device 21, despite the migration already started. The egress data item (10.0.0.1, 1000 -> 9.9.9.9, 8000) corresponds to a new connection. SNF1, receiving the egress data, extracts the egress key and determines that the set of state does not comprise any state corresponding to the extracted egress key. A new state is created by SNF1, and the egress data item is forwarded to SNF2 over the data path together with an information item (also called metadata) describing the new created state. In the case of a NAT, the metadata transmitted by SNF1 to SNF2 for example comprises the allocated port, the source IP address and port identifier. Any state information created by SNF1 as the new state is created is included in the metadata.

SNF2 receiving the data item from SNF1 over the data path together with the metadata creates a new state in its own set of states (received from SNF1 as part of the migration), the new state being created according to the metadata received together with the egress data item. According to different variants, the data item is further processed (address translation or other) by SNF1 or SNF2 or both as previously described, and further routed to the target device 22.

Similarly, an egress and/or ingress data item received by SNF1 for which the corresponding state is updated by SNF1 as the migration started is also forwarded to SNF2 over the data path together with a metadata describing the state update.

Forwarding data items from SNF1 to SNF2 as a new state is created or an existing state is updated after the migration started allows to migrate the stateful function between two processing devices without freezing data connections and without losing any data during the migration.

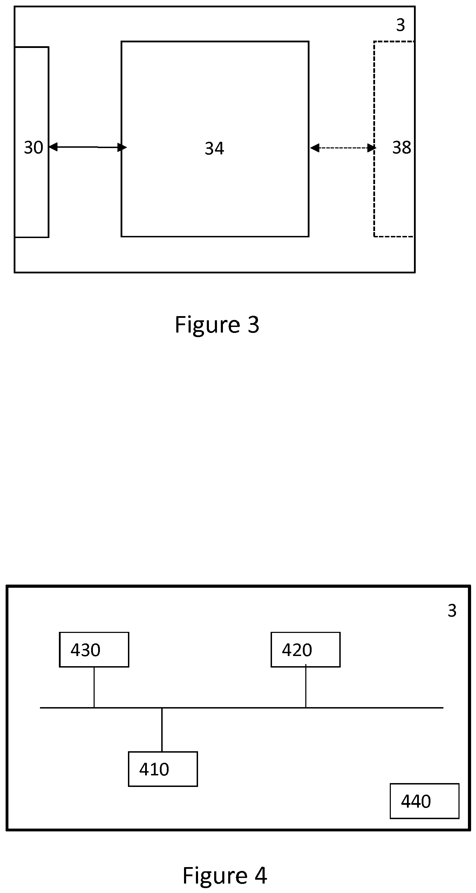

**Figure** 3 represents a processing device 3 running an instance of a migrating stateful function according to two specific and non-limiting embodiments. The stateful function is migrating from a first instance running on a first processing device to a second device running on a second processing device. According to different embodiments, the processing device 3 is either the first or the second processing device running respectively the first or the second instance of the migrating stateful function.

According to a specific and non-limiting embodiment of the principles, the processing device 3 comprises a first network interface 30, configured to send and receive data items to/from to/from a first network.

According to a specific and non-limiting embodiment of the principles, the processing device 3 further comprises an optional second network interface 38, configured to send and receive data items to/from to/from a second network.

According to different embodiments of the disclosed principles, the first 30 and the second 38 optional network interfaces 30 belongs to a set comprising:
- a wired LAN (Local Area Network) interface such as Ethernet, IEEE 802.3 or any wired interface of the IEEE 802 family of network interfaces.
- a WAN (Wide Area Network) interface such a 2G/3G/4G cellular networks, WiMax interface, xDSL, FFTx;
- a wireless LAN (Wireless Local Area Network) interface such as Bluetooth, WiFi in any flavor, or any kind of wireless interface of the IEEE 802 family of network interfaces;

More generally any network interface is compatible with the disclosed principles.

According to a first specific and non-limiting embodiment of the principles the first 30 and optional second 38 network interfaces are linked to a processing module 34 configured to apply a stateful function to a data item received from a data flow via the first 30 and/or the second 38 network interface, wherein the stateful function processes data items of the data flow according to a set of states. The processing module is further configured to migrate the stateful function by transferring the set of states of the stateful function running on the processing device to a second instance running on a second processing device, the data flow being steered to the second processing device. The processing module is further configured to create a new state in the set of states if the set of states does not comprise any state related to the data item. If the new state is created in the set of states by the processing module 34 as migrating is ongoing, the processing module 34 is configured to forward the data item to the second instance together with an information item describing the new state, via the first and/or the second network interface.

According to a second specific and non-limiting embodiment of the principles the first 30 and optional second 38 network interfaces are linked to a processing module 34 configured to receive a set of states of a migrating function from a first instance via the first and/or the second network interface, a data flow being steered to the processing device. The processing device is further configured to migrate the stateful function by processing the data items of the data flow according to the received set of states. The processing device is further configured to receive from the first instance a data item corresponding to a new state created in the set of states of the first instance after the second instance was started on the processing module 34, the data item being received by the processing module 34 along with an information item describing the new state. The processing module 34 is configured to add the new state in the set of states.

**Figure** 4 represents an exemplary architecture of the processing device 3 according to a specific and non-limiting embodiment, where the processing device 3 is configured to forward a first data packet from a first network to a second network. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carrying out the processing method described with reference to figures 1A and/or 1 B. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).
According to exemplary and non-limiting embodiments, the processing device 3 belongs to a set comprising a gateway, a router, a communication device, a desktop computer, a server, a cloud computing instance.

## Claims

1. A method for migrating a stateful function from a first instance (SNF1) to a second instance (SNF2), the stateful function processing data items of a data flow according to a set of states, the method comprising in the first instance (SNF1):
- applying the stateful function to a data item (200A, 202A, 200B, 202B, 200C, 202C) received from the data flow;
- migrating the stateful function by transferring (S15A) the set of states of the first instance (SNF1) to the second instance (SNF2), the data flow being steered to the second instance (SNF2);
the method being **characterized in that**:
- if a new state related to the data item (200A, 202A, 200B, 202B, 200C, 202C) is created (S16A) in the set of states by the first instance as said migrating is ongoing, the data item (200C) is forwarded (S17A) from the first instance (SNF1) to the second instance (SNF2) together with an information item describing the new state.

2. The method according to claim 1, wherein if a state is updated by the first instance (SNF1) as said migrating is ongoing, the data item (200C) is forwarded from the first instance (SNF1) to the second instance (SNF2) together with an updated information item describing the updated state.

3. A method for migrating a stateful function from a first instance (SNF1) to a second instance (SNF2), the stateful function processing data items (200A, 202A, 200B, 202B, 200C, 202C) of a data flow according to a set of states, the method comprising in the second instance (SNF2):
- receiving (S15B) the set of states of the first instance (SNF1), the data flow being steered to the second instance (SNF2);
- migrating the stateful function by processing (S18B) said data items (200A, 202A, 200B, 202B, 200C, 202C) of the data flow according to the received set of states;
the method being **characterized in that** it further comprises in the second instance (SNF2):
- receiving (S17B) from the first instance (SNF1) a data item (200C) corresponding to a new state created in the set of states of the first instance after the second instance was started, the data item (200C) being received along with an information item describing the new state;
- adding (S19B) the new state in the set of states.

4. The method according to claim 3, further comprising:
- receiving from the first instance (SNF1) a further data item corresponding to a state updated in the set of states of the first instance (SNF1) after the second instance (SNF2) was started, the further data item being received along with an updated information item describing the updated state;
- updating the state in the set of states

5. The method according to claim 1 or 2, wherein applying the stateful function to the data item (200A, 202A, 200B, 202B, 200C, 202C) comprises extracting a key from the data item (200A, 202A, 200B, 202B, 200C, 202C) and processing the data item (200A, 202A, 200B, 202B, 200C, 202C) according to the state corresponding to the key.

6. The method according to any of claims 1 to 5, wherein the stateful function operates between an egress network interface (230) and an ingress network (240) interface, said extracting a key from a data item comprising extracting an egress key if the data item (200A, 200B, 200C) is received from the egress network interface (230), and extracting an ingress key if the data item (202A, 202B, 202C) is received from the ingress network interface (240).

7. The method according to claim 6, wherein the new state is created if there is no state in the set of states corresponding to the egress key.

8. The method according to any of claims 5 to 7, wherein processing the data item (202A, 202B, 202C) comprises dropping the data item if there is no state in the set of states corresponding to the ingress key.

9. The method according to any of claims 5 to 8, wherein the stateful function comprises a network address translation, and creating the new state comprises allocating a translated port identifier different from the translated port identifiers of already existing states.

10. The method according to any of claims 5 to 8, wherein the stateful function comprises a stateful firewall, and processing the data item (200A, 202A, 200B, 202B, 200C, 202C) comprises updating the state with a time of reception of the data item.

11. A first processing device (3) for migrating a stateful function from a first instance to a second instance, the first instance running on the first processing device (3), the stateful function processing data items (200A, 202A, 200B, 202B, 200C, 202C) of a data flow according to a set of states, the first processing device (3) comprising means for:
- applying (34) the stateful function to a data item received from the data flow;
- migrating (34) the stateful function by transferring the set of states of the first instance to the second instance, the data flow being steered to the second instance;
the first processing device (3) being **characterized in that**:
- if a new state related to the data item is created in the set of states by the first instance as said migrating is ongoing, the data item (200C) is forwarded from the first instance to the second instance together with an information item describing the new state.

12. The first processing device (3) according to claim 11, wherein if a state is updated by the first instance as said migrating is ongoing, the data item (200C) is forwarded from the first instance to the second instance together with an updated information item describing the updated state.

13. A second processing device (3) for migrating a stateful function from a first instance to a second instance, the second instance running on second processing device, the stateful function processing data items (200A, 202A, 200B, 202B, 200C, 202C) of a data flow according to a set of states, the second processing device comprising means for:
- receiving (30, 38) the set of states of the first instance, the data flow being steered to the second instance;
- migrating (34) the stateful function by processing said data items of the data flow according to the received set of states;
the second processing device (3) being **characterized in that** it further comprises means for:
- receiving (30, 38) from the first instance a data item (200C) corresponding to a new state created in the set of states of the first instance after the second instance was started, the data item (200C) being received along with an information item describing the new state;
- adding (34) the new state in the set of states.

14. The second processing device (3) according to claim 13, further comprising means for:
- receiving (30, 38) from the first instance a further data item corresponding to a state updated in the set of states of the first instance after the second instance was started, the further data item being received along with an updated information item describing the updated state;
- updating (34) the state in the set of states.

15. A computer program product for migrating a stateful function from a first instance to a second instance, the computer program product comprising program code instructions executable by a processor for:
- applying the stateful function to a data item (200A, 202A, 200B, 202B, 200C, 202C) received from the data flow;
- migrating the stateful function by transferring (S15A) the set of states of the first instance (SNF1) to the second instance (SNF2), the data flow being steered to the second instance (SNF2);
the computer program product being **characterized in that**:
- if a new state related to the data item (200A, 202A, 200B, 202B, 200C, 202C) is created (S16A) in the set of states by the first instance as said migrating is ongoing, the data item (200C) is forwarded (S17A) from the first instance (SNF1) to the second instance (SNF2) together with an information item describing the new state.
